# EUROPEAN PATENT SPECIFICATION

(11) **EP 2 826 359 B1**
(45) Date of publication and mention of the grant of the patent: **26.12.2018**
(21) Application number: 14173647.0
(22) Date of filing: 24.06.2014
(51) Int. Cl.: A01F 25/20

(54) **Self-loading feed mixing wagon comprising a loading device**
Selbstladender Zufuhrmischwagen mit einer Ladevorrichtung
Wagon mélangeur semi-automatique comprenant un dispositif de chargement

(30) Priority: 24.06.2013 BE 201300434
(43) Date of publication of application: 21.01.2015
(73) Proprietor: Debutrac BVBA, 9880 Aalter (BE)
(72) Inventor: De Busschere, Frederick Richard, 9880 AALTER (BE)
(74) Representative: Chielens, Kristof

(56) References cited:
- EP-A1- 1 062 861
- EP-A2- 1 712 123
- DE-A1- 19 829 905
- DE-U1- 29 608 854
- FR-A1- 2 893 643
- GB-A- 2 002 645
- US-A1- 2002 129 590

## Description

The present invention relates to a self-loading feed mixing wagon comprising a loading device and a mixing section in which the loading device is configured to pick up roughage and to discharge the picked-up roughage in the direction of the mixing section and in which the loading device comprises a pick-up device for picking up roughage and a discharging device for discharging the picked-up roughage.
In livestock breeding, and more particularly in the dairy cattle and cattle sector, use is often made of feed mixing wagons to ensure that the cattle receives feed of optimum composition. Said feed mixing wagons comprise a mixing section in which different types of roughage are brought together and mixed. Examples of roughage are grass silage, maize, hay, straw, soybean meal, rape meal, potatoes and grass. There are both feed mixing wagons which are not self-loading and feed mixing wagons which are self-loading.
When using feed mixing wagons which are not self-loading, at least two agricultural machines are required, namely a feed mixing wagon and an agricultural machine/loading implement for picking up the different types of roughage and taking them to the mixing section of the feed mixing wagon. The advantage in this case is that the roughage, both the roughage which is picked-up and the roughage which remains behind, is not structurally affected, but the drawback in this case is that two machines have to be used which is laborious and time-consuming.

Often, use is made of so-called self-loading feed mixing wagons in order to make mixing of the roughage slightly less laborious and time-consuming. Thus, it is known to use a self-loading and self-propelling feed mixing wagon in which said feed mixing wagon comprises a loading device for picking up and discharging the roughage and in which said loading device comprises a blade drum. Said blade drum is directly brought into contact with a certain type of stored roughage in order thus to be able to pick up the required amount of this specific type of roughage. This is less laborious and less time-consuming than is the case with non-self-loading feed mixing wagons. However, due to the fact that a rotating component, in this case the blade drum, comes into direct contact with the stored roughage, the remaining roughage is structurally affected. In the case of silaged feed, for example, the remaining roughage is affected as oxygen enters the remaining stored roughage due to the operation of the blade drum. Said blade drum has a relatively high rotary speed, up to 500 revolutions per minute, in order to be able to free roughage from the stored roughage. Due to this relatively high rotary speed, the picked-up roughage is also affected. Picked-up straw and picked-up concentrate pellets are turned into fine dust by said blade drum, thus causing feed to be lost.

In order to prevent the feed from being structurally affected, it is also possible to use a self-loading and self-propelling feed mixing wagon in which said feed mixing wagon comprises a loading device in which the loading device comprises a vibrating blade for picking up roughage and in which the loading device comprises a transport roller for discharging the picked-up roughage. The vibrating blade is brought into contact with the stored roughage, as a result of which an amount of roughage is cut off the stored roughage. This cut-off roughage is discharged by means of the transport roller. The advantage of cutting off the roughage is that the remaining roughage is structurally affected to a lesser degree, although a greater power is required than is the case with the feed mixing wagon comprising a blade drum.

The European patent publication EP 1 712 123 also describes a device for removing and processing roughage for livestock. To this end, the device is provided with a removal unit which comprises a pivot arm which is supported so as to be rotatable about a pivot pin at one end and bears a removal element at the free end. The device furthermore comprises a collecting tray for removed roughage, a container for removed fodder, and conveying means for conveying roughage from the collecting tray to the container. The removal element is configured as a cutting board having at least one cutting blade which can be moved to and fro. In order to discharge the cut-off roughage from the cutting board, discharging means are provided in the form of a roller which is fitted at a distance above the cutting blade so as to be rotatable in the cutting board. Said device inter alia has the drawback that a moving cutting blade is highly susceptible to wear and breakage.

FR 2 893 643 discloses a loading and unloading bucket which is to be coupled to a self-propelled machine, comprising a front wall and a back wall joined by a base wall, and an endless screw arranged longitudinally against the base wall in order to discharge the contents of the bucket through the flanks thereof, wherein at least one flank is without a closing wall, and wherein it is provided with at least one articulated arm which is mobile between a position closing the flank without a closing wall, and a position freeing said flank.

It is therefore an object of the invention to develop a self-loading feed mixing wagon comprising a loading device which does not structurally affect either the picked-up roughage or the remaining roughage and which does not require great power either.
The object is achieved by providing a self-loading feed mixing wagon according to claim 1. The loading device for a self-loading feed mixing wagon according to an embodiment of the invention, comprises a pick-up device for picking up roughage and a discharging device for discharging the picked-up roughage, wherein the pick-up device comprises two gripper halves which are pivotable with respect to each other and which can be pivoted between an open configuration and a closed configuration, wherein one gripper half is configured as a cutting board with a fixed blade, and the other gripper half is configured as a scoop, and wherein said discharging device comprises a discharging rotor which is rotatably arranged in the scoop, wherein the scoop comprises an opening at the back via which the picked-up roughage can be discharged from the loading device by the discharging device, and wherein, in use, the picked-up roughage is discharged via the top side of the discharging rotor, due to the direction of rotation of the discharging rotor.

Said gripper halves may, for example, be connected to each other so as to be hydraulically pivotable. The discharging device is arranged in said pick-up device, preferably at the bottom of the pick-up device, in particular in the lower gripper half. This indicates that the discharging device is situated in the space delimited by the pick-up device when the gripper halves are in their closed configuration.

The loading device does not structurally affect the rotating component, namely the discharging rotor does not come into direct contact with the stored roughage, as it is the gripper halves which are in direct contact with the stored roughage. The roughage can be picked up due to the fact that the gripper halves can be pivoted between an open and a closed configuration. When the gripper halves come into contact with the stored roughage, part of the stored roughage is loosened and picked up due to the transition from an open configuration to a closed configuration. Said transition of the gripper halves cuts off the roughage, as a result of which the remaining roughage is not structurally affected. As soon as the roughage has been pinched off by the gripper halves, it is discharged by the discharging rotor. As a result thereof, the speed of rotation of the discharging rotor can be set lower than, for example, the speed of rotation of a blade drum of an existing loading device comprising a blade drum as a pick-up device and a discharging device, as the discharging rotor already conveys all pinched-off/cut-off roughage and does not itself have to loosen any roughage from a larger amount of stored roughage. The discharging rotor thus only has a discharge function and can therefore rotate more slowly. As a result thereof, the picked-up roughage is not structurally affected either.

Since the roughage is loosened from the stored roughage by the transition from the open configuration to the closed configuration of the gripper halves, little power is required compared to an existing loading device comprising a vibrating blade as said pinching movement/cutting movement requires less power than a vibrating blade.

One gripper half, preferably the upper gripper half, is configured as a cutting board with a fixed blade. The expression fixed blade is intended to mean that the blade cannot be moved with respect to the cutting board. Using a cutting board with a fixed blade, the picked-up roughage is cut off from the stored roughage in a clean manner, as a result of which the remaining roughage is not structurally affected. Said embodiment is highly suitable in combination with a scoop as the other gripper half. The scoop then preferably remains virtually stationary during the transition from the open configuration to the closed configuration and vice versa, while the gripper half with the fixed cutting board comprising a fixed blade moves during said transitions. As a result thereof, a scooping movement is achieved, in which the picked-up roughage is cut off very effectively. When the gripper halves are connected to each other so as to be rotatable, the rotation shaft is preferably virtually parallel to the ground on which the stored roughage is situated.

Preferably, the rotary speed of the discharging rotor is between 10 and 120 revolutions per minute, more preferably the rotary speed of the discharging rotor is between 50 and 80 revolutions per minute. Said rotary speeds are very suitable for discharging the picked-up roughage at a sufficiently high speed without structurally affecting the picked-up roughage.

In a specific embodiment, the discharging device comprises a top blade which is configured to remove the picked-up roughage from the discharging rotor during discharging. The top blade prevents the discharging rotor from becoming stuck, as the top blade prevents the roughage to be discharged from sticking to the discharging rotor.

In an alternative embodiment, the discharging device comprises an auxiliary rotor in order to facilitate removal of the roughage to be discharged from the discharging rotor, in which said auxiliary rotor is situated downstream of the discharging rotor and in which said auxiliary rotor, in use, rotates in the opposite direction of the discharging rotor. Said auxiliary rotor prevents the discharging rotor from becoming stuck, as the auxiliary rotor prevents the roughage to be discharged from sticking to the discharging rotor.

Furthermore preferably, the dimensions of said auxiliary rotor are narrower than the dimensions of said discharging rotor.

The two gripper halves are preferably connected to each other so as to be rotatable about the same rotation shaft. This is a simple pivoting movement which can readily be effected. The rotatable connection about a rotation shaft can be effected by means of one or more hydraulic cylinders. Hydraulic cylinders require little power and are not very susceptible to wear and overload.

In a highly preferred embodiment one of the two gripper halves, preferably together with the loading arm, remains virtually stationary during the transition from the open configuration to the closed configuration and vice versa. Said gripper half which remains virtually stationary during said transitions can be introduced/pushed into the stored roughage during the open configuration of the gripper halves, following which the gripper halves adopt their closed configuration. As a result thereof, a gripping movement is executed, which results in one or more virtually smooth surfaces in the remaining roughage, where roughage has been picked up by the loading device. In the case of silaged feed, for example, such a surface ensures that little or no oxygen can reach the remaining stored roughage, as a result of which the remaining roughage is not structurally affected. In addition, the operative operating the loading device can determine very accurately where roughage will be picked up since one of the gripper halves remains virtually stationary during picking up of the roughage. When said gripper half which remains virtually stationary during said transitions is introduced/pushed into the stored roughage, said gripper half may be rotated slightly in order to facilitate the introduction/pushing of said gripper half into the stored roughage slightly.

Furthermore, the gripper half which remains virtually stationary during the transition from the open configuration to the closed configuration and vice versa is configured as the scoop. A scoop is highly suitable to be introduced/pushed into stored roughage. When using a scoop, picked-up material is usually situated in the scoop. Logically, the scoop is thus situated at the bottom and the other gripper half is situated above the scoop when using the loading device. Said other gripper half then carries out the gripping movement. The top side of the other gripper half may be designed to be open or closed. Since nothing has to rest on the top side of the gripper half, the top side of the other gripper half does not have to be designed to be closed. The edges of the scoop may optionally be designed as teeth and/or as a blade. The sharper the edges, the simpler the scoop can be pushed into the stored roughage.
Furthermore, still more preferably, the discharging device is arranged in the scoop and the scoop comprises a preferably narrow opening at the back, via which the picked-up roughage can be discharged from the loading device by the discharging device. That is to say that the discharging device is situated in the space delimited by the scoop. As the picked-up roughage is logically situated in the scoop, a discharging rotor which is arranged in the scoop can discharge the picked-up roughage in a simple manner.

In use, the picked-up roughage is preferably discharged via the top side of the discharging rotor, due to the direction of rotation of the discharging rotor. If said discharging rotor is arranged in a gripper half which is situated at the bottom, this means that the roughage cannot be discharged between the discharging rotor and the gripper half, resulting in less structural damage and additionally less risk of the discharging rotor becoming stuck.

A self-loading feed mixing wagon according to the invention comprises a loading device and a mixing section in which the loading device is configured to pick up roughage and to discharge the picked-up roughage in the direction of the mixing section, in which the loading device is a loading device as described above.
By using a loading device as described above, the remaining stored roughage and/or the picked-up roughage is not structurally affected. In addition, such a loading device requires little power compared to existing loading devices which structurally affect the roughage to a small degree, such as the existing loading device in which the loading device comprises a vibrating blade and a transport roller.

Furthermore preferably, the feed mixing wagon comprises a conveying device which is designed to collect the roughage discharged by the loading device and to convey it to the mixing section. By means of said conveying device, the roughage can readily be conveyed to the mixing section. Said conveying device preferably comprises a conveyor belt. By means of a conveyor belt, the roughage can be conveyed to the mixing section in a simple and efficient manner. The conveyor belt is preferably narrower than the cutting portion.

The two gripper halves of the loading device are connected to each other so as to be rotatable about a rotation shaft which is virtually parallel to the plane in which the feed mixing wagon is situated and the bottom gripper half remains virtually stationary during the transition of the gripper halves from the open configuration to the closed configuration and vice versa and said gripper half comprises a scoop. During the open configuration of the gripper halves, the scoop can thus readily be pushed into stored roughage virtually parallel to the plane in which the feed mixing wagon is situated and the other gripper half can then perform a gripping movement when the gripper halves adopt their closed position. The picked-up roughage is then situated on the scoop. Said way of picking up roughage is very suitable and does not structurally affect the roughage, or only to a slight degree.

The discharging device is situated in said scoop, the scoop comprises an opening at the back via which the picked-up roughage can be discharged from the loading device by the discharging device, and the picked-up roughage is discharged via the top side of the discharging rotor due to the direction of rotation of the discharging rotor. The discharging rotor is situated close to the picked-up roughage and the picked-up roughage is discharged towards the opening via the discharging rotor and thus not between the scoop and discharging rotor, as a result of which the picked-up roughage is not structurally damaged and there is less risk of the discharging rotor becoming stuck.

The loading device of the feed mixing wagon is preferably arranged so as to be movable in the vertical direction with respect to the rest of the feed mixing wagon. This may be effected, for example, by means of hydraulics. This makes it possible to adjust the height of the loading device, which in turn makes it possible to select the height at which a part of the stored roughage is picked up.

In a highly preferred embodiment, the feed mixing wagon is also self-propelling, thus making it possible to drive the loading device even more efficiently.

The present invention will now be described in more detail by means of the following detailed description of a preferred embodiment of a loading device and a feed mixing wagon according to the present invention. The sole aim of said description is to give illustrative examples and to indicate further advantages and particulars of said loading device and said feed mixing wagon comprising said loading device and can therefore by no means be interpreted as a limitation of the area of application of the invention or of the patent rights defined in the claims.

In said detailed description, reference numerals are used to refer to the attached drawings, in which:
- ***Fig. 1*** *shows a perspective view of a first embodiment of a loading device, in which the loading device is in an open position;*
- ***Fig. 2*** *shows a perspective view of the loading device as illustrated in* *Fig. 2**, in which the loading device is in a closed position;*
- ***Fig. 3*** *shows a side view*/*cross section of the loading device as illustrated in* *Figs. 1 and 2**, in which the loading device is in an open position;*
- ***Fig. 4*** *shows a side view*/*cross section of the loading device as illustrated in* *Figs. 1 to 3**, in which the loading device is in a closed position;*
- ***Fig. 5*** *shows a perspective view of a feed mixing wagon according to the invention comprising a loading device as illustrated in* *Figs. 1 to 4**, in which the loading device is situated below the feed mixing wagon and is in a closed position;*
- ***Fig. 6*** *shows a perspective view of a feed mixing wagon as illustrated in* *Fig. 5* *and comprising a loading device as illustrated in* *Figs. 1 to 4**, in which the loading device is situated below the feed mixing wagon and is in an open position;*
- ***Fig. 7*** *shows a perspective view of a feed mixing wagon as illustrated in* *Figs. 5 and 6* *and comprising a loading device as illustrated in* *Figs. 1 to 4**, in which the loading device is situated above the feed mixing wagon and is in an open position;*
- ***Fig. 8*** *shows a perspective view of a feed mixing wagon as illustrated in* *Figs. 5 to 7* *and comprising a loading device as illustrated in* *Figs. 1 to 4**, in which the loading device is situated above the feed mixing wagon and is in a closed position;*
- ***Fig. 9*** *shows a side view*/*cross section of a second embodiment of a loading device according to the invention in which the loading device is in an open position.*

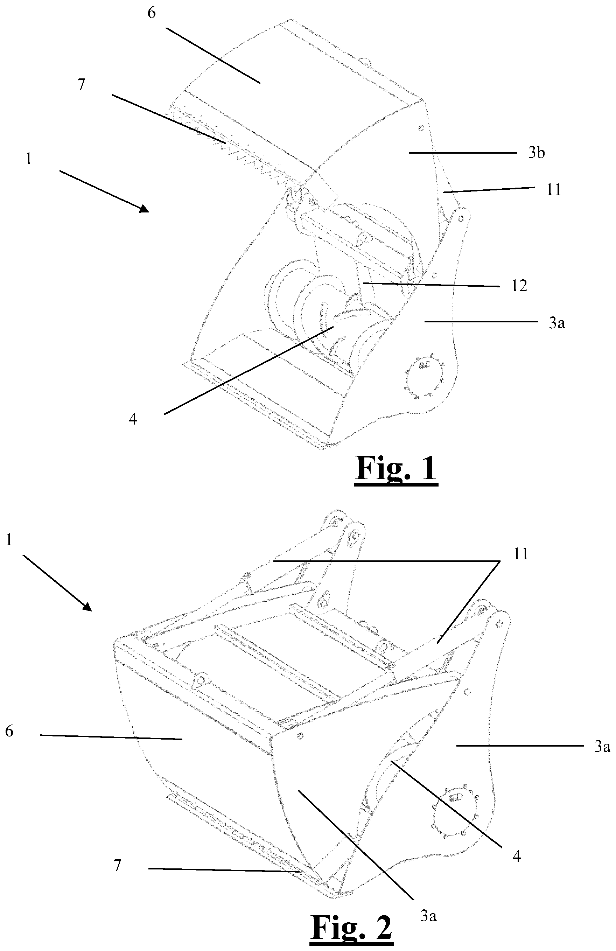

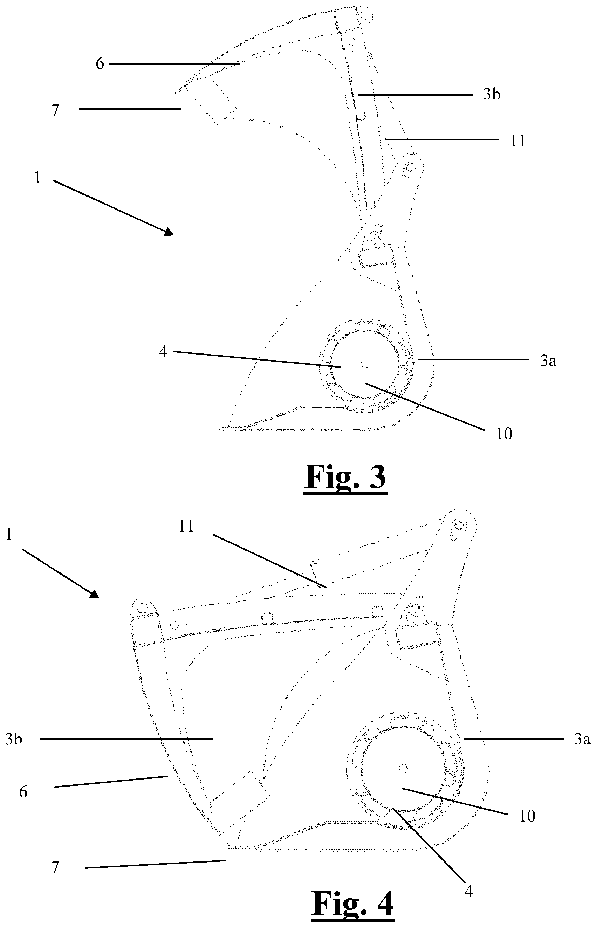

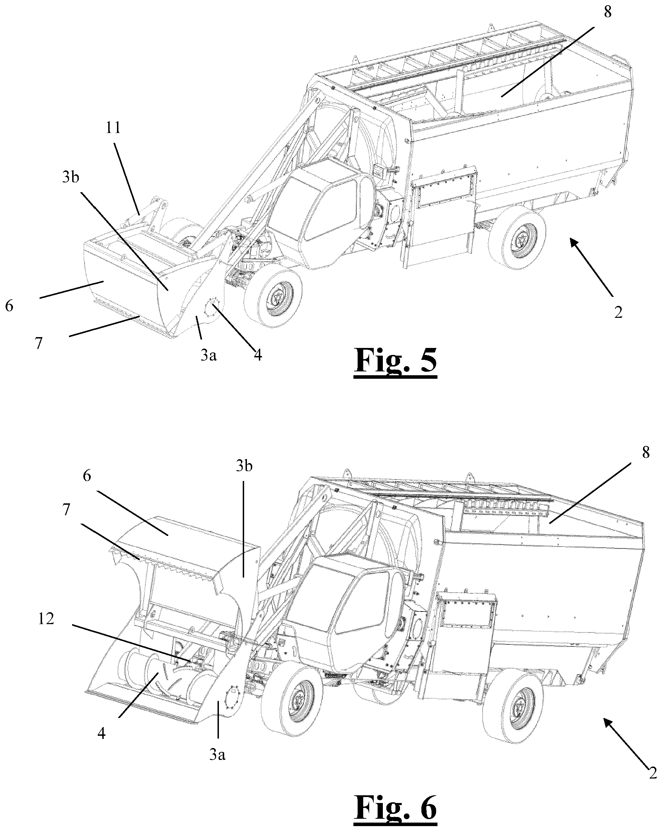

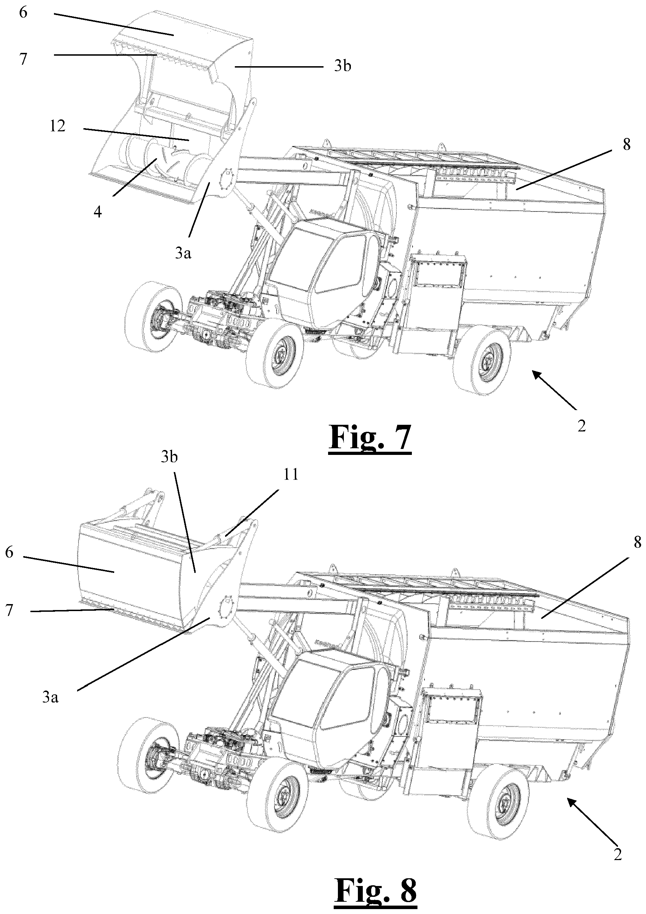

Figs. 1 to 4 and Fig. 9 illustrate a loading device (1). Said loading device (1) is particularly suitable for use as a loading device (1) for a self-loading and self-propelling feed mixing wagon (2). Figs. 5 to 8 illustrate such a self-loading and self-propelling feed mixing wagon (2) comprising a loading device (1) as illustrated in Figs. 1 to 4.

Said loading device (1), as illustrated in Figs. 1 to 4 and Fig. 9, comprises a pick-up device for picking up roughage and a discharging device for discharging the picked-up roughage.

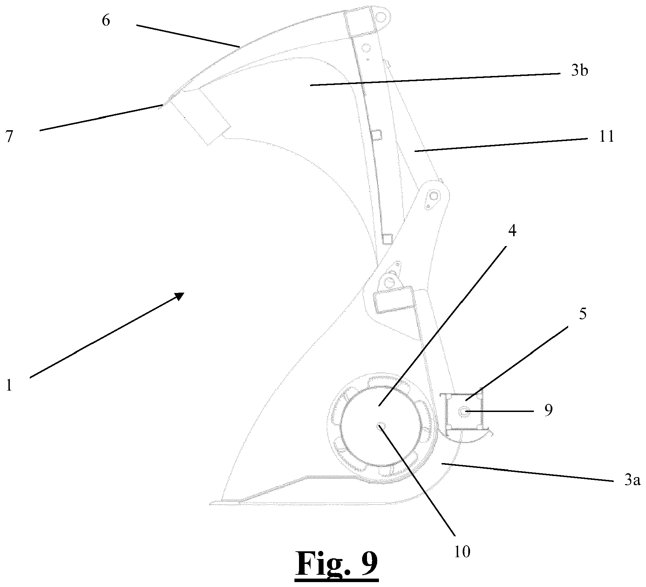

The pick-up device comprises two gripper halves (3a, 3b) which are connected to each other so as to be rotatable about a rotation shaft in such a way that the two gripper halves (3a, 3b) can be moved between an open configuration and a closed configuration and can thus also assume all positions between said open and said closed configuration. During use of the loading device (1), the rotation shaft is virtually parallel to the ground on which the feed mixing wagon (2) with the loading device (1) is situated. The bottom gripper half (3a) is a scoop (3a) with serrated edges and an opening (12) at the back and remains virtually stationary during the transition from the open configuration to the closed configuration and vice versa. The upper gripper half (3b) is configured as a cutting board (6) with a fixed blade (7). The gripper halves (3a, 3b) perform a gripping movement during the transition from the open configuration to the closed configuration and vice versa. Said gripping movement is made possible by hydraulic cylinders (11) which are connected to the upper gripper half (3b) and which can rotate said upper gripper half (3b) upwards and downwards.
The discharging device of the loading device (1), as illustrated in Figs. 1 to 4, comprises a discharging rotor (4) and a top blade. Said discharging rotor (4) is rotatably arranged in the scoop (3a) and is rotatable about a rotation shaft (10). Said rotation shaft (10) is virtually parallel to the rotation shaft of the gripper halves (3a, 3b). The top blade is arranged between the discharging rotor (4) and the opening (12) and fixed with respect to the opening and is configured to remove the picked-up roughage from the discharging rotor (4) during discharging thereof.
The discharging device of the loading device (1), as illustrated in Fig. 9, comprises a discharging rotor (4) and an auxiliary rotor (5), in which the auxiliary rotor (5) has smaller dimensions than the discharging rotor (4). The cross section of the auxiliary rotor (5) at right angles to the longitudinal axis of the auxiliary rotor (5) is square with projections at the corners, in which said projections can readily remove the roughage from the discharging rotor (4) and sweep it along. The discharging rotor (4) is rotatably arranged in the scoop (3a) and is rotatable about a rotation shaft (10). Said rotation shaft (10) is virtually parallel to the rotation shaft of the gripper halves (3a, 3b). The auxiliary rotor (5) is arranged between the discharging rotor (4) and the opening (12) (and almost touches the discharging rotor) and is configured to remove the picked-up roughage from the discharging rotor (4) during discharging thereof or to prevent roughage from becoming trapped between the discharging rotor and the scoop and to discharge the roughage towards the opening (12).

At the front, the feed mixing wagon (2) illustrated in Figs. 5 to 8 comprises a loading device (1) as described above. Furthermore, the feed mixing wagon (2) also comprises a conveyor belt and a mixing section (8) in which the conveyor belt collects the roughage discharged by the discharging device and conveys it to the mixing section (8) of the feed mixing wagon (2) in such a manner that the different kinds of roughage can be mixed to produce an optimum feed. To this end, the start of the conveyor belt is situated at the location of the opening (12) of the scoop (3a) and also moves along with the loading device (1) and the end of the conveyor belt is situated at the location of the mixing section (8). The height of the loading device (1) with respect to the remainder of the feed mixing wagon (2) can be adjusted by means of hydraulic cylinders.

This feed mixing wagon (2) is used in livestock breeding, more particularly in the dairy cattle and cattle sector. The operation of said self-loading and self-propelling feed mixing wagon (2) is described below.

The operative who operates the feed mixing wagon (2) drives to different kinds of stored roughage and in each case picks up the desired amount of roughage. The picked-up roughage is in each case transferred to the mixing section (8) of the feed mixing wagon (2). In the mixing section (8), the different kinds of picked-up roughage are mixed. The resulting mixture has a specific composition and is used as animal feed. Picking up the different kinds of roughage is effected by driving the feed mixing wagon (2) to the different kinds of stored roughage. The gripper halves (3a, 3b), in the open configuration, are taken to the stored roughage. The level of the gripper halves (3a, 3b) with respect to the remaining components of the feed mixing wagon (2) is determined by the level from which roughage is to be picked up. The scoop (3a) is pushed into the stored roughage, for example, by driving the feed mixing wagon (2) forwards. As a result of the serrated edges of the scoop (3a), this requires relatively little power. After the scoop (3a) has been pushed into the stored roughage, the upper gripper half (3b) rotates downwards in such a manner that the gripper halves (3a, 3b) assume their second, closed configuration. The rotation of the upper gripper half (3b) is effected by means of the hydraulic cylinders (11) which are connected to the upper gripper half (3b). Due to the fact that the upper gripper half (3b) is configured as a cutting board (6) with a fixed blade (7), said upper gripper half (3b) cuts into the roughage, resulting in a smooth cutting face. Then, the loading device (1) is moved away from the stored roughage, for example by driving the feed mixing wagon (2) backwards. Since a smooth cutting face remains behind in the stored roughage after roughage has been picked up, the structure of the remaining stored roughage is not affected. Such a cutting face ensures, for example with silaged roughage, that little or no oxygen can enter through the cutting face, as a result of which the silaged roughage is not affected.

During picking up of the roughage and/or following picking up of the roughage, the discharging rotor (4) rotates in a certain direction in order thus to discharge the picked-up roughage via the discharging rotor (4) in the direction of the opening (12) of the scoop (3a). To this end, the discharging rotor (4) rotates in the opposite sense of the driving wheels of the feed mixing wagon (2) when the latter drives forwards. The picked-up roughage is removed from the discharging rotor (4) by means of the top blade in such a way that it can move through the opening (12). When an auxiliary rotor (5) is used instead of a top blade, the auxiliary rotor (5) rotates about a rotation shaft (9) in the opposite direction to the discharging rotor (4). The picked-up roughage lands on the conveyor belt from the opening (12). Said conveyor belt then conveys the picked-up roughage to the mixing section (8) of the self-loading feed mixing wagon (2).

## Claims

1. Self-loading feed mixing wagon (2) comprising a loading device (1) and a mixing section (8), in which the loading device (1) is configured to pick up roughage and to discharge the picked-up roughage in the direction of the mixing section (8), and in which the loading device (1) comprises a pick-up device for picking up roughage and a discharging device for discharging the picked-up roughage, wherein the pick-up device comprises two gripper halves (3a, 3b) which are pivotable with respect to each other and which can be pivoted between an open configuration and a closed configuration, **characterized in that** one gripper half (3b) is configured as a cutting board (6) with a fixed blade (7), **in that** said discharging device comprises a discharging rotor (4) which is rotatably arranged in the other gripper half (3a), wherein the two gripper halves (3a, 3b) are connected to each other so as to be rotatable about a rotation shaft which is virtually parallel to the plane in which the feed mixing wagon (2) is situated, **in that** the bottom gripper half (3a) remains virtually stationary during the transition from the open configuration to the closed configuration and vice versa, and **in that** said gripper half (3a) comprises a scoop (3a).

2. Self-loading feed mixing wagon (2) according to Claim 1, **characterized in that** the feed mixing wagon (2) comprises a conveying device which is configured to collect the roughage discharged by the loading device (1) and convey it to the mixing section (8).

3. Self-loading feed mixing wagon (2) according to Claim 1 or 2, **characterized in that** the discharging device is situated in said scoop (3a), the scoop (3a) comprises an opening (12) at the back via which the picked-up roughage can be discharged from the loading device (1) by the discharging device, and **in that** the picked-up roughage is discharged via the top side of the discharging rotor (4), due to the direction of rotation of the discharging rotor (4).

4. Self-loading feed mixing wagon (2) according to one of Claims 1 to 3, **characterized in that** the loading device (1) is arranged so as to be movable in the vertical direction with respect to the rest of the feed mixing wagon (2).

5. Self-loading feed mixing wagon (2) according to one of the preceding claims, **characterized in that** the rotary speed of the discharging rotor (4) is situated between 10 and 120 revolutions per minute, preferably between 50 and 80 revolutions per minute.

6. Self-loading feed mixing wagon (2) according to one of the preceding claims, **characterized in that** the discharging device comprises a top blade which is configured to remove the picked-up roughage from the discharging rotor (4) during discharging.

7. Self-loading feed mixing wagon (2) according to one of the preceding claims, **characterized in that** the discharging device comprises an auxiliary rotor (5) in order to facilitate removal of the roughage to be discharged from the discharging rotor (4), in which said auxiliary rotor (5) is situated downstream of the discharging rotor (4) and in which said auxiliary rotor (5), in use, rotates in the opposite direction of the discharging rotor (4).

8. Self-loading feed mixing wagon (2) according to Claim 7, **characterized in that** the dimensions of said auxiliary rotor (5) are smaller than the dimensions of said discharging rotor (4).

9. Self-loading feed mixing wagon (2) according to one of the preceding claims, **characterized in that,** in use, the picked-up roughage is discharged via the top side of the discharging rotor (4) due to the direction of rotation of the discharging rotor (4).

## Patentansprüche

1. Selbstladender Futtermischwagen (2), umfassend eine Ladevorrichtung (1) und eine Mischsektion (8), wobei die Ladevorrichtung (1) ausgelegt ist, Rauhfutter aufzunehmen und das aufgenommene Rauhfutter in die Richtung der Mischsektion (8) abzugeben, und wobei die Ladevorrichtung (1) eine Aufnahmevorrichtung zum Aufnehmen von Rauhfutter und eine Abgabevorrichtung zum Abgeben des aufgenommenen Rauhfutters umfasst,
**dadurch gekennzeichnet, dass** die Aufnahmevorrichtung zwei Greiferhälften (3a, 3b) umfasst, die in Bezug aufeinander schwenkbar sind, und die zwischen einer offenen Auslegung und einer geschlossenen Auslegung verschwenkt werden können, wobei eine Greiferhälfte (3b) als Schneidbrett (6) mit einer fixierten Klinge (7) ausgelegt ist, und wobei die Abgabevorrichtung einen Abgaberotor (4) umfasst, der drehbar in der anderen Greiferhälfte (3a) angeordnet ist, wobei die beiden Greiferhälften (3a, 3b) miteinander derart verbunden sind, dass sie um eine Drehwelle gedreht werden können, die praktisch parallel zu der Ebene ist, in welcher der Futtermischwagen (2) angeordnet ist, und dadurch, dass die untere Greiferhälfte (3a) praktisch stationär bleibt während des Übergangs von der offenen Auslegung in die geschlossene Auslegung und umgekehrt, und dadurch, dass die Greiferhälfte (3a) eine Schaufel (3a) umfasst.

2. Selbstladender Futtermischwagen (2) nach Anspruch 1,
**dadurch gekennzeichnet, dass** der Futtermischwagen (2) eine Fördervorrichtung umfasst, die ausgelegt ist, das Rauhfutter zu sammeln, das von der Ladevorrichtung (1) abgegeben wird, und dieses zur Mischsektion (8) zu befördern.

3. Selbstladender Futtermischwagen (2) nach Anspruch 1 oder 2,
**dadurch gekennzeichnet, dass** die Abgabevorrichtung in der Schaufel (3a) angeordnet ist, die Schaufel (3a) eine Öffnung (12) an der Hinterseite umfasst, über die das aufgenommene Rauhfutter von der Ladevorrichtung (1) durch die Abgabevorrichtung abgegeben werden kann, und dadurch, dass das aufgenommene Rauhfutter über die Oberseite des Abgaberotors (4) aufgrund der Drehrichtung des Abgaberotors (4) abgegeben wird.

4. Selbstladender Futtermischwagen (2) nach einem der Ansprüche 1 bis 3,
**dadurch gekennzeichnet, dass** die Ladevorrichtung (1) derart angeordnet ist, dass diese in der vertikalen Richtung in Bezug auf den Rest des Futtermischwagens (2) bewegt werden kann.

5. Selbstladender Futtermischwagen (2) nach einem der vorhergehenden Ansprüche,
**dadurch gekennzeichnet, dass** die Drehgeschwindigkeit des Abgaberotors (4) zwischen 10 und 120 Umdrehungen pro Minute, vorzugsweise zwischen 50 und 80 Umdrehungen pro Minute, liegt.

6. Selbstladender Futtermischwagen (2) nach einem der vorhergehenden Ansprüche,
**dadurch gekennzeichnet, dass** die Abgabevorrichtung eine obere Klinge umfasst, die ausgelegt ist, das aufgenommene Rauhfutter von dem Abgaberotor (4) während der Abgabe zu entfernen.

7. Selbstladender Futtermischwagen (2) nach einem der vorhergehenden Ansprüche,
**dadurch gekennzeichnet, dass** die Abgabevorrichtung einen Hilfsrotor (5) umfasst, um die Entfernung des Rauhfutters zu erleichtern, das von dem Abgaberotor (4) abzugeben ist, wobei der Hilfsrotor (5) stromabwärts von dem Abgaberotor (4) angeordnet ist, und wobei sich der Hilfsrotor (5), im Gebrauch, in der entgegengesetzten Richtung des Abgaberotors (4) dreht.

8. Selbstladender Futtermischwagen (2) nach Anspruch 7,
**dadurch gekennzeichnet, dass** die Abmessungen des Hilfsrotors (5) kleiner sind als die Abmessungen des Abgaberotors (4).

9. Selbstladender Futtermischwagen (2) nach einem der vorhergehenden Ansprüche,
**dadurch gekennzeichnet, dass**, im Gebrauch, das aufgenommene Rauhfutter über die Oberseite des Abgaberotors (4) aufgrund der Drehrichtung des Abgaberotors (4) abgegeben wird.

## Revendications

1. Mélangeuse automotrice (2) comprenant un dispositif de chargement (1) et une section de mélange (8), dans lequel le dispositif de chargement (1) est configuré pour ramasser du fourrage grossier et pour évacuer le fourrage grossier ramassé en direction de la section de mélange (8), et dans lequel le dispositif de chargement (1) comprend un dispositif de ramassage pour ramasser du fourrage grossier et un dispositif d'évacuation pour décharger le fourrage grossier ramassé, **caractérisé en ce que** le dispositif de ramassage comprend deux moitiés de préhension (3a, 3b) qui peuvent pivoter l'une par rapport à l'autre et qu'on peut faire pivoter entre une configuration ouverte et une configuration fermée, dans lequel une moitié de préhension (3b) est configurée comme une planche à découper (6) avec une lame (7) fixe et dans lequel ledit dispositif d'évacuation comprend un rotor d'évacuation (4) qui est agencé rotatif dans l'autre moitié de préhension (3a), dans lequel les deux moitiés de préhension (3a, 3b) sont raccordées l'une à l'autre de façon à pouvoir tourner autour d'un axe de rotation qui est pratiquement parallèle au plan dans lequel est situé le fourgon (2) mélangeur de fourrage ; et **en ce que** la moitié inférieure de préhension (3a) reste pratiquement fixe pendant la transition de la configuration ouverte à la configuration fermée et vice-versa ; et **en ce que** ladite moitié de préhension (3a) comprend un godet (3a).

2. Mélangeuse automotrice (2) selon la revendication 1, **caractérisé en ce que** le fourgon (2) mélangeur de fourrage comprend un dispositif de transport qui est configuré pour recueillir le fourrage grossier évacué par le dispositif de chargement (1) et le transporter à la section de mélange (8).

3. Mélangeuse automotrice (2) selon la revendication 1 ou 2, **caractérisé en ce que** le dispositif d'évacuation est situé dans ledit godet (3a), le godet (3a) comprenant une ouverture (12) à l'arrière par laquelle le fourrage grossier ramassé peut être évacué du dispositif de chargement (1) par le dispositif d'évacuation ; et **en ce que** le fourrage grossier ramassé est évacué par le côté supérieur du rotor d'évacuation (4), en raison du sens de rotation du rotor d'évacuation (4).

4. Mélangeuse automotrice (2) selon l'une quelconque des revendications 1 à 3, **caractérisé en ce que** le dispositif de chargement (1) est agencé de façon à pouvoir se déplacer dans la direction verticale par rapport au reste du fourgon (2) mélangeur de fourrage.

5. Mélangeuse automotrice (2) selon l'une quelconque des revendications précédentes, **caractérisé en ce que** la vitesse de rotation du rotor d'évacuation (4) est comprise entre 10 et 120 tours par minute, de préférence entre 50 et 80 tours par minute.

6. Mélangeuse automotrice (2) selon l'une quelconque des revendications précédentes, **caractérisé en ce que** le dispositif d'évacuation comprend une lame supérieure qui est configurée pour enlever le fourrage grossier ramassé du rotor d'évacuation (4) pendant l'évacuation.

7. Mélangeuse automotrice (2) selon l'une quelconque des revendications précédentes, **caractérisé en ce que** le dispositif d'évacuation comprend un rotor auxiliaire (5) afin de faciliter l'enlèvement du fourrage grossier à évacuer du rotor d'évacuation (4), dans lequel ledit rotor auxiliaire (5) est situé en aval du rotor d'évacuation (4) et dans lequel ledit rotor auxiliaire (5), lors de l'utilisation, tourne dans le sens opposé à celui du rotor d'évacuation (4).

8. Mélangeuse automotrice (2) selon la revendication 7, **caractérisé en ce que** les dimensions dudit rotor auxiliaire (5) sont inférieures aux dimensions dudit rotor d'évacuation (4).

9. Mélangeuse automotrice (2) selon l'une quelconque des revendications précédentes, **caractérisé en ce que**, lors de l'utilisation, le fourrage grossier ramassé est évacué par le côté supérieur du rotor d'évacuation (4) en raison du sens de rotation du rotor d'évacuation (4).
